Europäisches Patentamt

European Patent Office

Office européen des brevets

(19)

(11) **EP 0 715 487 B1**

(12) **EUROPÄISCHE PATENTSCHRIFT**

(45) Veröffentlichungstag und Bekanntmachung des Hinweises auf die Patenterteilung:
**20.02.2002 Patentblatt 2002/08**

(51) Int Cl.⁷: **H05B 41/288**, H05B 41/04, H05B 41/38

(21) Anmeldenummer: **95118397.9**

(22) Anmeldetag: **22.11.1995**

(54) **Verfahren und Schaltungsanordnung zum Starten und Betreiben von Hochdruck-Entladungslampen**

Process and circuit for starting and operating high pressure discharge lamps

Procédé et circuit pour amorcer et alimenter des lampes à décharge haute-pression

(84) Benannte Vertragsstaaten:
**BE DE FR GB IT NL**

(30) Priorität: **02.12.1994 DE 4442898**

(43) Veröffentlichungstag der Anmeldung:
**05.06.1996 Patentblatt 1996/23**

(73) Patentinhaber: **Patent-Treuhand-Gesellschaft für elektrische Glühlampen mbH 81543 München (DE)**

(72) Erfinder:
• **Fromm, Dietrich, Dr. D-83627 Warngau (DE)**
• **Arlt, Joachim D-81375 München (DE)**

(56) Entgegenhaltungen:
EP-A- 0 411 617    FR-A- 2 034 104
FR-A- 2 489 069    US-A- 5 036 256

**Beschreibung**

Die Erfindung betrifft ein Verfahren zum Starten und Betreiben von Hochdruck-Entladungslampen gemäß dem Oberbegriff des Anspruchs 1, sowie eine Schaltungsanordnung zur Durchführung des Verfahrens gemäß Anspruch 1.

Unter der Bezeichnung Hochdruck-Entladungslampen sind Lampen mit mindestens zwei innerhalb eines Entladungsgefäßes angeordneten Hauptelektroden, zwischen denen sich im Betrieb eine stromstarke Bogenentladung ausbildet, zu verstehen, beispielsweise Metallhalogenid-, Natriumdampf- oder Edelgas-Bogenlampen. Während des Zündvorgangs wird das zunächst elektrisch isolierende (Zünd)Gas zwischen den Elektroden ionisiert, und der Lampenstrom nimmt rasch zu. Im Verlaufe der folgenden Hochlaufphase erwärmen sich die zunächst kalten Elektroden sowie das Entladungsgefäß auf Betriebstemperatur. Im anschließenden stationären Betrieb liefern die heißen Elektroden durch Glühemission die für die Aufrechterhaltung der Bogenentladung notwendigen freien Elektronen.

Zum Zünden der Lampenfüllung werden üblicherweise Hochspannungspulse an die Lampenelektroden gelegt (z.B. DE-OS 42 27 427). Das resultierende elektrische Feld zwischen den Elektroden beschleunigt die durch die ionisierende Umgebungsstrahlung (z.B. Höhenstrahlung) sowie durch Feldemission erzeugten freien Primärelektronen, um mittels Ladungsträgerbombardement aus den Elektrodenoberflächen neue Sekundärelektronen auszulösen und so eine Ladungsträgerlawine zu starten.

Häufig ist es erforderlich, die Zündung durch Zugabe radioaktiver Stoffe zu unterstützen. Die von diesen Stoffen ausgesandte ionisierende Strahlung erhöht unter anderem die Dichte der Primärelektronen und erleichtert so den Aufbau einer Ladungsträgerlawine zwischen den Elektroden. Zu diesem Zweck kann der Lampenfüllung z.B. der β-Strahler Krypton-85 zugemischt sein. Eine weitere Maßnahme besteht in der Dotierung der Elektroden mit Thorium (α-Strahler), wodurch sich außerdem die Elektronenaustrittsarbeit erniedrigt. Allerdings sind allgemein Bestrebungen im Gange, auf radioaktive Zusätze zu verzichten.

Während der Startphase werden die Elektroden durch das Ladungsträgerbombardement zunehmend aufgeheizt. Mit steigender Temperatur gewinnt die Glühemission der Elektroden als effizienter Mechanismus zur Erzeugung freier Elektronen an Bedeutung. Folglich nimmt die Ionisierung der Lampenfüllung zwischen den Elektroden weiter zu, bis sich bei ausreichend hoher Leitfähigkeit eine stationäre Bogenentladung ausbildet. Die Zeitdauer zwischen der Ionisierung der Füllung und der Ausbildung der Bogenentladung, welche die anfängliche Glimmentladung "übernimmt", wird auch als Übernahmezeit bezeichnet.

Der Übernahmephase folgt in der Regel eine Hochlaufphase, während der sich die Lampe auf ihre stationäre Temperatur aufheizt. Erst nach Abschluß dieser Hochlaufphase stellt sich die Betriebsspannung an den Lampenelektroden auf einen stationären Wert der Bogenbrennspannung ein.

Aus der Schrift EP-A-0 411 617 ist ein Verfahren zum Starten und Betreiben von Entladungslampen bekannt. Demgemäß wird mittels Hochspannungs-Impulsen zunächst eine Glimmentladung in der Lampe gezündet. Die Glimmentladung wird für eine vorbestimmte Zeitdauer mit geringer Leistung betrieben. Danach wird die Lampe mit einer Hochfrequenzleistung betrieben, die höher als die geringe Leistung für die Glimmentladung ist. Dadurch wird die Lampe von der anfänglichen Glimmentladung in die hauptsächliche Bogenentladung überführt.

In der US-PS 4 331 905 ist eine Schaltungsanordnung zum Starten und Betreiben von Gasentladungslampen offenbart. Diese beinhaltet neben einem Vorschaltgerät für den Lampenbetrieb zusätzlich eine Hochfrequenzschaltung, die eine für das Zünden von kalten bzw. Wiederzünden von heißen Lampen erforderlich hohe Zündspannung bereitstellt. Gemäß der Funktionsweise dieser Schaltungsanordnung liegen während der Startphase sowohl die Betriebsspannung des Vorschaltgeräts als auch die hochfrequente Zündspannung an den Lampenelektroden. Nach erfolgter Ionisierung der Lampenfüllung wird die hochfrequente Zündspannung abgeschaltet.

Nachteilig bei diesen Lösungen ist, daß, insbesondere während der Zündphase, aber auch während der Übernahmephase aufgrund der - ggf. impulsartigen - hohen elektrischen Zündfeldstärken auf den Elektrodenoberflächen zunächst durch Feldemission lokale Überhitzungen sowie Sputterprozesse auftreten. Solange die Elektroden noch kalt sind, werden dabei, unter anderem durch auf die Elektrodenoberflächen auftreffende Ladungsträger, Teilchen aus diesen Oberflächen ausgelöst. Dadurch wird bei jedem Startvorgang Elektrodenmaterial zerstäubt, welches sich teilweise an der Innenwandung des Entladungsgefäßes niederschlägt. Dies führt zur zunehmenden Schwärzung des Gefäßes und folglich zur Verminderung der Lichtausbeute der Lampe. Außerdem dient die Zündspannung im wesentlichen nur zur Zündung einer Hilfs-Glimmentladung mit relativ geringem Leistungsumsatz. Die zur Ausbildung der Bogenentladung - d.h. der eigentlichen Hauptentladung - notwendige Heizleistung zum Erreichen der Glühtemperatur der Elektroden wird erst während der Übernahmephase durch die Betriebsspannung bereitgestellt. Dadurch dauert die Übernahmephase relativ lange und trägt so ebenfalls zur Zerstäubung von Elektrodenmaterial und folglich zur Schwärzung des Entladungsgefäßes bei.

Der Erfindung liegt die Aufgabe zugrunde, die genannten Nachteile zu beseitigen und ein Verfahren zum Starten und Betreiben von Entladungslampen anzugeben, das die Übernahmezeit für die Ausbildung des Bogens verkürzt. Ein weiterer Aspekt der Erfindung ist es, mit einer möglichst geringen Zündspannung eine zuverlässige Zündung der Entladung zu gewährleisten, auch ohne radioaktive Zusätze in der Lampe. Diese Aufgabe wird erfindungsgemäß durch die kennzeichnenden Merkmale des Anspruchs 1 gelöst. Weitere vorteilhafte Merkmale der Erfindung sind in den darauf gerichteten Unteransprüchen erläutert.

Eine weitere Aufgabe besteht darin, eine Schaltungsanordnung anzugeben, mit der das vorgeschlagene Verfahren durchgeführt werden kann. Diese Aufgabe wird durch eine Schaltungsanordnung mit Merkmalen gemäß Anspruch 15 gelöst. Weitere vorteilhafte Ausführungen der Anordnung sind in den darauf gerichteten Unteransprüchen erläutert.

Der Grundgedanke der Erfindung besteht darin, eine hochfrequente Wechselspannung - im folgenden Startspannung genannt - an die Lampenelektroden anzulegen, die gezielt so gewählt ist, daß während der Zündphase im wesentlichen nur im Raum zwischen den Elektroden freie Elektronen durch Stoßionisierung der Gasteilchen erzeugt werden. Im Unterschied zu bisherigen Zündtechniken spielt hierbei die Sekundärelektronenemission auf der Oberfläche der noch kalten Elektroden zunächst keine Rolle. Ein weiteres wichtiges Merkmal ist, daß, mittels des von der Startspannung erzeugten hochfrequenten elektrischen Feldes, eine ausreichend hohe elektrische HF-Leistung für eine rasche Aufheizung der Elektroden bereitgestellt wird. Die Betriebsspannung der Lampe wird erst nach einer Vorheizphase an die Elektroden geschaltet. Dann sind die Elektroden auf Glühtemperatur aufgeheizt und somit in der Lage, durch Glühemission ausreichend viele Elektronen für die stromstarke Bogenentladung zu liefern.

Im Vergleich zu herkömmlichen Verfahren wird dadurch eine deutliche Verkürzung der Übernahmezeit erzielt. Dies geht mit einer entsprechenden Verminderung der während der Startphase - d.h. der Zünd- und Aufheiz- sowie Übernahmephase - auf den Elektrodenoberflächen auftretenden Sputterprozesse einher. Der daraus resultierende entscheidende Vorteil ist eine geringere Kolbenschwärzung und folglich eine verbesserte Maintenance bzw. höhere Lebensdauer der Lampen.

Unterstützt wird dieser Vorteil durch eine weitere Möglichkeit, die ebenfalls eine direkte Folge des erfindungsgemäßen Zündverfahrens ist. Überraschenderweise kann nämlich der Kaltfülldruck gegenüber bisherigen Zündtechniken deutlich erhöht und folglich das Zerstäuben von Elektrodenmaterial während der Zündphase weiter vermindert werden. Bei einer 70 W Metallhalogenidlampe beispielsweise kann der Argonpartialdruck von typisch ca. 150 hPa auf über 300 hPa erhöht werden, unter Beibehaltung einer kurzen Zünd- und Übernahmezeit. Bei Natriumdampflampen kommt einer Erhöhung des Xenonpartialdrucks neben der verbesserten Maintenance noch eine weitere willkommene Bedeutung zu. Hier kann pro hPa Druckerhöhung eine Zunahme des Lichtstroms um ca. 2 lm erzielt werden. Mit einer 70 W Natriumdampflampen beispielsweise wurden Zündungen und Bogenübernahmen bei Xenonpartialdrücken bis zu 500 hPa realisiert. Bei einem bisherigen typischen Xenonpartialdruck von 250 hPa entspricht dies einer Zunahme des Lichtstroms um ca. 500 lm.

Außerdem hat es sich gezeigt, daß Lampen mit relativ langen Zünd- und Übernahmezeiten, z.B. Lampen mit unthorierten Elektroden und ohne Kryptonzusatz, ja daß überraschenderweise zum Teil sogar Lampen, die sich mittels konventioneller Zündtechnik nicht (mehr) zünden lassen mit Hilfe der Erfindung innerhalb kurzer Zeit zünden und anschließend zuverlässig brennen.

Für die Betriebsspannung werden - abgestimmt auf die Erfordernisse der zu betreibenden Lampe - Gleich- oder Wechselspannungen verwendet. Praktische Bedeutung für den Wechselspannungsbetrieb haben z.B. die Netzfrequenz (50 Hz) sowie Frequenzen von einigen 10 kHz, wie sie bei elektronischen Vorschaltgeräten üblich sind. Die Amplitude der Betriebsspannung an den Elektroden entspricht - nach der Übernahmephase - der Brennspannung des Entladungsbogens. Typische (Effektiv)Werte liegen größenordnungsmäßig im Bereich zwischen ca. 10 V und 100 V. Beim Einsatz des Verfahrens in Niedervoltnetzen, z.B. Kfz-Bordnetzen muß die Spannung daher wie üblich mit Hilfe eines DC-DC-Konverters hochgesetzt werden.

Als vorteilhaft für die Startspannung hat es sich erwiesen, die Frequenz gezielt so zu wählen, daß das Produkt aus der Frequenz f der Startspannung und dem Elektrodenabstand d die Bedingung $f \cdot d \geq 50 kHz \cdot cm$ erfüllt. Zum gegenwärtigen Zeitpunkt wird angenommen, daß dann die Schwingungsamplitude der Elektronen und erst recht der schwereren Ionen klein genug ist, um während der Zündphase für die Mehrzahl der Ladungsträger Verluste durch oszillatorische Drift zu den Elektrodenoberflächen sowie mit einem Ladungsträgerbombardement verbundene unerwünschte Elektrodeneffekte gering zu halten.

Andererseits nehmen im allgemeinen die Einkoppel- und Leitungsverluste mit steigender Frequenz zu. Unter diesem zusätzlichen Aspekt haben sich mit konventionellen HF-Anregungstechniken nach dem Oszillator-Verstärkerprinzip Frequenzen im Bereich zwischen ca. 100 kHz und 200 kHz als brauchbar erwiesen. Außerdem ist es zur Vermeidung unnötig langer Zuleitungen vorteilhaft, das die hochfrequente Startleistung erzeugende Gerät möglichst nahe der Lampe anzuordnen. Durch geeignete Anregungskonzepte, z.B. nach dem Prinzip des Freischwingers, ist es jedoch möglich, auch HF-Leistungen höherer Frequenzen mit geringen Verlusten in die Entladung einzukoppeln.

Die Zündung der Lampe erfolgt bei Erreichen einer ausreichend hohen HF-Feldstärke $E_{HF} = U_{HF}/d$, die sich als Quotient aus der Startspannung $U_{HF}$ zwischen den Elektroden und ihrem Abstand d annähern läßt. Geeignete Spitze-Werte für die HF-Feldstärke liegen im Bereich zwischen ca. 1 kV/cm und 6 kV/cm, bevorzugt zwischen 2,5 kV/cm und 4,5 kV/cm. Um auch bei den unterschiedlichen Fülldrücken der Zündgase kommerziell erhältlicher Lampen optimale Ergebnisse zu erzielen, ist es vorteilhaft, die auf den Fülldruck p bezogene HF-Feldstärke $E_{HF}$, d.h. $E_{HF}/p$ zu berücksichtigen. Die HF-Zündung kalter Lampen ist mit den genannten Feldstärken und Frequenzen problemlos möglich. Für die üblichen Inertgas-Fülldrücke von Bogenlampen in der Größenordnung bis einige 10 kPa ergeben sich druckbezogene Spitze-Feldstärken $E_{HF}^S/p$ im Bereich von ca. 0,1 V/cm · Pa bis 0,5V/cm · Pa. Bei heißen Lampen können aufgrund des hohen Drucks (typisch 100 kPa und mehr) und ggf. wegen der Anwesenheit elektronenaffiner Füllungsbestandteile, z.B. von Halogeniden, Zündspannungen von typisch 10 kV und mehr erforderlich sein. Aus diesem Grund ist für die Heißzündung ein an sich bekannter Verfahrensschritt vorzuschalten, bei dem ein oder mehrere für eine Ionisierung geeignete Hochspannungspulse an die Elektroden des Entladungsgefäßes angelegt werden. Wegen der unter Umständen sehr hohen Spannungswerte ist dazu in der Regel ein spezielles Hochspannungs-Zündgerät erforderlich.

In einer konkreten Ausführung des Verfahrens liegt der Spitze-Wert der Startspannung $U_{HF}^S$ im Bereich zwischen ca. 1,5 kV und 3,5 kV, bevorzugt im Bereich zwischen ca. 2 kV und 3 kV.

Die Dauer der Übernahmezeit ist im wesentlichen von der Effizienz der Glühemission der Elektroden abhängig. Sie ist folglich durch die Vorheizleistung für die Elektroden, d.h. die hochfrequente Startleistung, sowie durch die Dauer der Vorheizphase gezielt beeinflußbar. Für ein ausreichend rasches Aufheizen der Elektroden auf Glühtemperatur beträgt die mittlere hochfrequente Startleistung etwa das 0,2- bis 0,7-fache der Betriebsleistung, bevorzugt das 0,3- bis 0,6-fache.

Unter Beachtung der oben erläuterten Parameterbereiche für die Frequenz und die Amplitude der Startspannung sowie für die hochfrequente Startleistung läßt sich das Prinzip der Erfindung durch folgende Verfahrensschritte beschreiben: 1. Einschalten der hochfrequenten Startspannung zum Startzeitpunkt $t_0$, 2. Zuschalten der Betriebsspannung zum Zeitpunkt $t_1 = t_0 + \Delta t_H$ und 3. Abschalten der Startspannung zum Zeitpunkt $t_2 = t_1 + \Delta t_\ddot{U} = t_0 + \Delta t_H + \Delta t_\ddot{U}$. Die Vorheizzeit $\Delta t_H$ beträgt je nach Höhe der mittleren hochfrequenten Startleistung bis zu ca. 3 s, typisch liegt sie im Bereich zwischen 0,1 s und 1,5 s. Danach sind die Elektroden bereits weißglühend. Ohne daß eine Festlegung auf irgendeine theoretische Erklärung beabsichtigt ist, wird gegenwärtig davon ausgegangen, daß neben Elektronenstößen auch Wirbelströme und der Skineffekt an der Aufheizung beteiligt sind. Da die Elektroden - im Unterschied zum Stand der Technik - beim Zuschalten der Betriebsspannung bereits Glühtemperatur erreicht haben, bildet sich die Bogenentladung rasch aus. Bei gleichzeitigem Einschalten von Start- und Betriebsspannung ($\Delta t_H = 0$) ist die Übernahmezeit hingegen z.T. deutlich verlängert. Nach einer Überlappzeit $\Delta t_\ddot{U}$ wird die Bogenentladung von der Betriebsspannung alleine gespeist. Die Überlappzeit $\Delta t_\ddot{U}$ liegt typisch im Bereich zwischen ca. 0,1 s und 0,5 s.

Der Vollständigkeit halber sei an dieser Stelle erwähnt, daß die hochfrequente Startspannung im Prinzip auch während des stationären Betriebs der Lampe an den Elektroden anliegen kann. Allerdings sind gegenwärtig keine besonderen Vorteile erkennbar, so daß diese Variante obsolet erscheint.

In einer Ausführung des Verfahrens ist die Dauer der Überlappzeit variabel auf die Übernahmezeit der jeweiligen Lampe abgestimmt. In diesem Fall wird das Ende der Überlappzeit $\Delta t_\ddot{U}$ aus dem Spannungssprung an den Lampenelektroden von der Leerlauf-Versorgungsspannung auf die Brennspannung der Bogenentladung abgeleitet. In den Fällen defekter oder fehlender Lampen wird die Startspannung einige Sekunden nach Verstreichen der üblichen Übernahmezeit gängiger Entladungslampen abgeschaltet, z.B. nach 5 s.

In einer vereinfachten Ausführung des Verfahrens ist die Überlappzeit fest vorgegeben. Die Dauer der Aufheizzeit, typisch ca. 0,5 s, und die hochfrequente Heizleistung, typisch ca. die halbe Betriebsleistung, sind dabei so bemessen, daß die Bogenübernahme beim Zuschalten der Betriebsspannung in der Regel sehr rasch stattfindet, typisch innerhalb von ca. 0,1 s bis 0,2 s. Durch eine Überlappzeit, die geringfügig länger als die Übernahmezeit ist, beispielsweise 0,3 s ist sichergestellt, daß sich der Bogen ausgebildet hat bevor die Startspannung abgeschaltet wird.

Im Prinzip kann auf eine Überlappung auch verzichtet werden ($\Delta t_\ddot{U} = 0$), d.h. die Start- und die Betriebsspannung werden synchron ab- bzw. zugeschaltet. Allerdings muß bei der Realisierung dieser Variante des Verfahrens ein höherer Steuerungsaufwand in Kauf genommen werden. Um während der Bogenübernahme ein Verlöschen der Entladung über eine längere Zeitdauer (Größenordnung: Millisekunde und länger) und damit ein Erkalten der Elektroden möglichst zu vermeiden, muß sichergestellt sein, daß die Startspannung erst in dem Moment abgeschaltet wird, in dem die Betriebsspannung an den Lampenelektroden anliegt. Die in der Praxis einfachste Lösung bleibt jedoch, der Startspannung nach der Vorheizzeit die Betriebsspannung hinzuzuschalten und erst nach einer Überlappzeit die Startspannung abzuschalten.

Eine prinzipielle Schaltungsanordnung zur Realisierung des erfindungsgemäßen Verfahrens weist ein mit einem ersten Schalter verbundenes Betriebsgerät und ein mit einem zweiten Schalter verbundenes HF-Zündgerät auf sowie einen die beiden Schalter steuernden Zeitgeber. Sowohl der Ausgang des die Betriebsspannung liefernden Betriebsgeräts als auch der Ausgang des die hochfrequente Startspannung liefernden HF-Zündgeräts sind, dem Zeitprogramm des Zeitgebers folgend, gleichzeitig bzw. zu verschiedenen Zeiten, mit den Lampenelektroden verbunden. Ein Sperrglied, beispielsweise eine Drossel, entkoppelt die Hochfrequenz vom Ausgang des Betriebsgeräts.

In einer Ausführung besteht das HF-Zündgerät aus einem HF-Leistungsoszillator zur Erzeugung der Hochfrequenz und einem nachgeschalteten Resonanzkreis, z.B. aus einer Reihenschaltung eines Kondensators und einer Spule, der die Amplitude der Hochfrequenz auf die erforderliche Hochspannung erhöht.

Der Vorteil dieser Überlagerungstechnik ist der problemlose und kostengünstige Austausch konventioneller Zündgeräte in bestehenden Vorschaltanlagen durch das HF-Überlagerungszündgerät inklusive Schalter und Zeitgeber.

Die Erfindung wird anhand der nachfolgenden Ausführungsbeispiele näher erläutert. Es zeigen

Figur 1 ein Flußdiagramm des prinzipiellen Verfahrens zum Starten und Betreiben von Entladungslampen,

Figur 2 einen schematischen Vergleich der Startphasen zweier Entladungslampen bei Anwendung zweier konventioneller Zündverfahren a und b sowie des erfindungsgemäßen Verfahrens c,

Figur 3 ein Blockschaltbild einer prinzipiellen Schaltungsanordnung mit einem über einen Zeitgeber gesteuerten Betriebs- und HF-Zündgerät,

Figur 4 ein Blockschaltbild einer Schaltungsanordnung gemäß Figur 3, wobei das HF-Zündgerät mit einem HF-Leistungsoszillator und einem Resonanzschwingkreis realisiert ist.

Figur 5 einen Vergleich gemessener Lichtströme als Funktion der Anzahl der Zündungen für Lampen mit HF-Zündgerät (Kurve 1) bzw. konventionellem Zündgerät (Kurve 2) sowie den entsprechenden prozentualen Gewinn an Lichtstrom gegenüber herkömmlich betriebenen Lampen (Kurve 3).

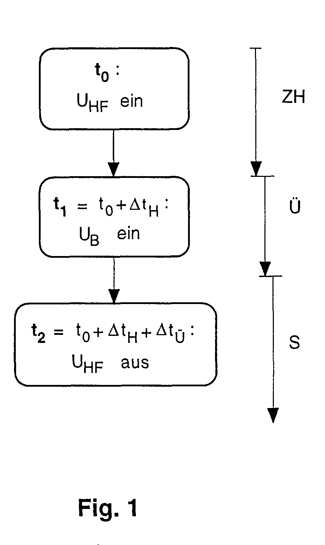

Figur 1 zeigt ein prinzipielles Flußdiagramm des erfindungsgemäßen Verfahrens. Zum Startzeitpunkt $t_0$ wird die Startspannung $U_{HF}$ an die Elektroden der Entladungslampe gelegt. Damit beginnt die Zünd- und Vorheizphase ZH, während der das hochfrequente elektrische Feld eine Entladung zwischen den Elektroden etabliert und die Elektroden auf Glühtemperatur erwärmt werden. Nach der Vorheizzeit $\Delta t_H$, d.h. zum Zeitpunkt $t_1 = t_0 + \Delta t_H$ wird die Betriebsspannung $U_B$ zugeschaltet. Dadurch bildet sich eine Bogenentladung zwischen den nun zur Glühemission fähigen Elektroden aus und beendet die Übernahmephase Ü. Nach der Überlappzeit $\Delta t_{\ddot{U}}$, d.h. zum Zeitpunkt $t_2 = t_1 + \Delta t_{\ddot{U}} = t_0 + \Delta t_H + \Delta t_{\ddot{U}}$ wird die Startspannung $U_{HF}$ ausgeschaltet. Damit ist die Startphase abgeschlossen und die Lampe geht, ggf. nach einer Hochlaufphase, in den stationären Betrieb S über.

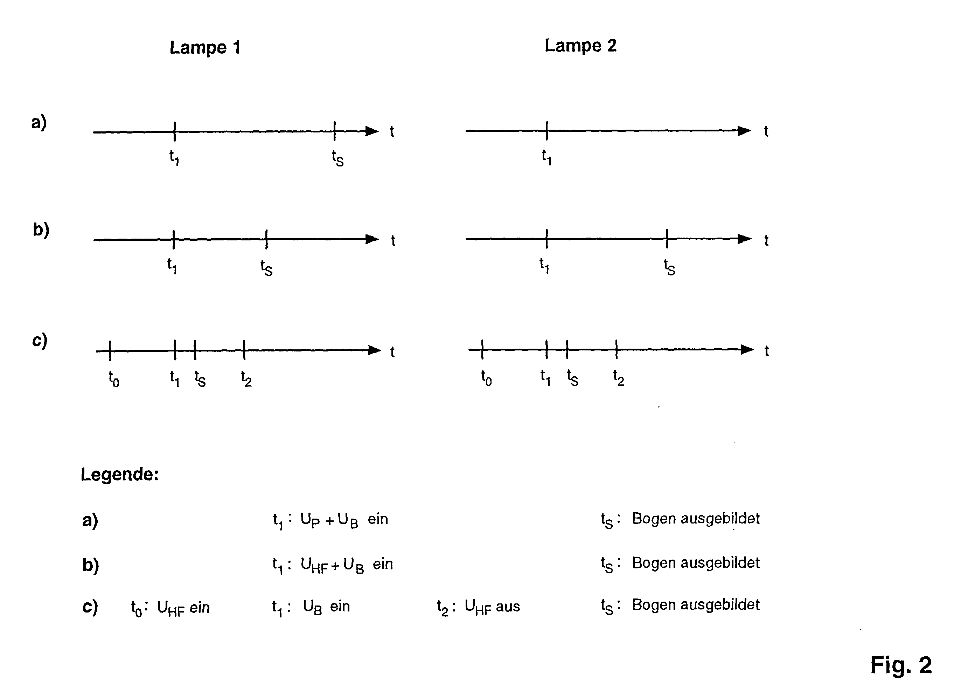

Figur 2 zeigt - am Beispiel zweier 70 W-Metallhalogenid-Entladungslampen mit unthorierten Elektroden und einem Zündgasdruck von ca. 130 hPa (Argon)- einen schematischen (nicht maßstäblichen) Vergleich der Dauern der Startphasen bei Anwendung zweier konventioneller Zündverfahren a, b sowie des erfindungsgemäßen Verfahrens c. Zu diesem Zweck sind u.a. jeweils die Zeitpunkte $t_1$, $t_S$ für das Einschalten der Betriebsspannung bzw. der vollständigen Ausbildung des Bogens - d.h. dem Ende der Übernahmephase - auf Zeitachsen t eingezeichnet. Die markierten Zeitpunkte wurden oszillographischen Aufnahmen des zeitlichen Verlaufs der jeweiligen Elektrodenspannung entnommen. Als Zeitpunkt $t_S$ wurde dabei jeweils der Spannungssprung auf die Bogenbrennspannung gewählt.

Der Fall a zeigt das Ergebnis bei Verwendung eines induktiven Vorschaltgeräts inklusive konventioneller Zündschaltung. Zum Zeitpunkt $t_1$ wurden die Netzspannung $U_B$ und eine bis zur Bogenübernahme andauernde Folge von Hochspannungspulsen $U_P$ an die Lampenelektroden gelegt. Nach ca. 2,7 s - symbolisiert durch die Zeitmarke ts - war der Bogen der Lampe 1 vollständig ausgebildet. Die Lampe 2 konnte hingegen nicht gezündet werden.

Im Fall b wurde zum Zeitpunkt $t_1$ die Netzspannung $U_B$ und gleichzeitig ($\Delta t_H = 0$) eine hochfrequente Startspannung $U_{HF}$ an die Lampenelektroden gelegt. Die Zeitdauer $t_S - t_1$ bis zum Ende der Übernahmephase betrug für die Lampe 1 ca. 0,9 s und für die Lampe 2 ca. 1,3 s. Während dieser Zeitdauer zeigten beide Lampen deutliche Flackererscheinungen.

Im Fall c wurde die hochfrequente Spannung $U_{HF}$ zum Zeitpunkt $t_0 < t_1$, d.h. vor dem Zuschalten der Netzspannung $U_B$ an die Lampenelektroden gelegt. Auf diese Weise wurden die Elektroden während der Dauer $\Delta t_H = t_1 - t_0$ der Zünd- und Vorheizphase vorgeheizt. Dadurch verkürzte sich die Dauer $t_S - t_1$ der Übernahmephase für beide Lampen auf ca. 0,1 s. Außerdem setzte der Bogen sofort an den Elektrodenspitzen an und folglich war keine Flackererscheinung beobachtbar. Die verwendeten Verfahrensparameter sind in der folgenden Tabelle zusammengestellt.

Dieser Vergleich belegt eindrucksvoll die vorteilhafte Wirkung der Erfindung.

Tabelle:

| Verfahrensparameter für den Start und Betrieb einer 70 W-Metallhalogenid-Entladungslampe gemäß dem Verfahren nach Figur 2c. | | | |
| --- | --- | --- | --- |
| Startspannung: | | Amplitude $U_{HF}^S$ (Spitze) | 2,5 kV |
| | | Frequenz | 150 kHz |
| | | HF-Leistung | 35 W |

Tabelle: (fortgesetzt)

| Verfahrensparameter für den Start und Betrieb einer 70 W-Metallhalogenid-Entladungslampe gemäß dem Verfahren nach Figur 2c. | | |
|---|---|---|
| Betriebsspannung: (stationäre Lampenbrennspannung) | Amplitude $U_B^{eff}$ (Effektiv) | 90 V |
| | Frequenz | 50 Hz |
| | Betriebsleistung | 70 W |
| Zeitdauern: | Vorheizzeit $\Delta t_H$ | 1 s |
| | Überlappzeit $\Delta t_Ü$ | 0,3 s |

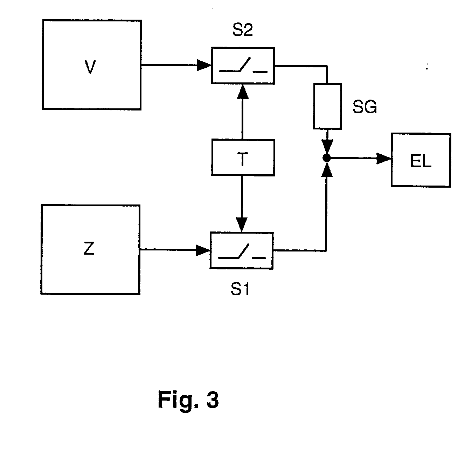

Figur 3 zeigt ein Blockschaltbild einer prinzipiellen Schaltungsanordnung zur Durchführung des Verfahrens gemäß Figur 1. Sie besteht im wesentlichen aus einem die Betriebsspannung liefernden Betriebsgerät V, einem HF-Zündgerät Z zur Erzeugung der hochfrequenten Startspannung sowie aus zwei von einem Zeitgeber T gesteuerten und mit dem HF-Zünd- bzw. Betriebsgerät verbundenen Schaltern S1 bzw. S2. Sowohl das Betriebsgerät V als auch das HF-Zündgerät Z sind mit der Entladungslampe EL verbunden. Ein HF-Sperrglied SG zwischen Betriebsgerät V und Entladungslampe EL einerseits sowie Betriebsgerät V und HF-Zündgerät Z andererseits verhindert während der Überlappphase die Einkopplung der Startspannung in das Betriebsgerät V.

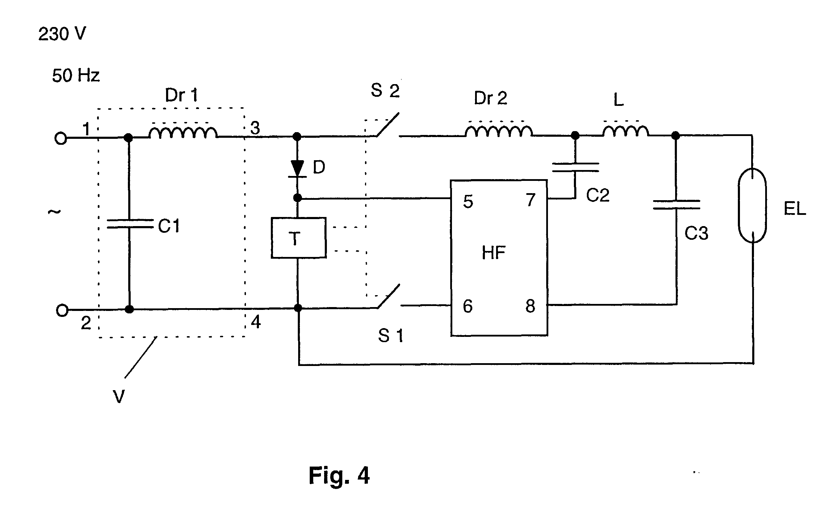

Figur 4 zeigt ein erweitertes Blockschaltbild einer Schaltungsanordnung gemäß Figur 3. Sie besteht aus einem mit 230 V und 50 Hz Netzspannung betriebenen konventionellen induktiven Vorschaltgerät V, einem HF-Leistungsoszillator HF nach an sich bekannten Schaltungsprinzipien, der eine hochfrequente Spannung erzeugt und mit dem nachgeschalteten Reihenresonanzkreis aus Spule L und Kondensator C3 ein HF-Überlagerungszündgerät bildet, sowie aus zwei mittels einer an sich bekannten Zeitgeberschaltung T, -hier realisiert durch Komparatoren mit durch RC-Glieder bestimmter Schaltverzögerung - gesteuerten Schaltern S1, S2.

Das Vorschaltgeräts V besteht aus einer seriellen Vorschaltdrossel Dr1 zur Begrenzung des Lampenstroms und einem parallel zum Eingang 1, 2 geschalteten Kompensationskondensator C1 zur Verbesserung des Leistungsfaktors. Die zwei Eingangsklemmen 1,2 des Vorschaltgeräts V sind mit der Netzspannung verbunden. Die Zeitgeberschaltung T ist vom Ausgang 3,4 des Betriebsgeräts V gespeist. Dazu ist die Zeitgeberschaltung T einerseits über eine Diode D mit der Vorschaltdrossel Dr1 und andererseits mit dem Fußpunkt des Kompensationskondensators C1 verbundenen. Der Eingang 5,6 des HF-Leistungsoszillators HF ist auf ähnliche Weise gespeist. Dazu ist eine erste Eingangsklemme 5 des HF-Leistungsoszillators HF mit dem Verbindungspunkt zwischen der Diode D und der Zeitgeberschaltung T kontaktiert. Die zweite Eingangsklemme 6 des HF-Leistungsoszillators HF ist über einen ersten Schalter S1, z.B. einen Halbleiterschalter, mit dem Fußpunkt des Kompensationskondensator C1 verbunden. Der Schalter S1 schaltet für die Dauer der Zünd- und Vorheiz- sowie der Überlappphase den HF-Leistungsoszillator HF ein. Der Verbindungspunkt zwischen der Vorschaltdrossel Dr1 und der Diode D ist über einen zweiten Schalter S2, beispielsweise ein mechanisches Relais sowie über eine Drossel Dr2 und eine Spule L mit einer ersten Elektrode der Entladungslampe EL verbunden. Die zweite Elektrode der Entladungslampe EL ist mit dem Fußpunkt des Kompensationskondensator C1 kontaktiert. Nach der Vorheizzeit verbindet somit der Schalter S2 das Betriebsgerät V mit der Entladungslampe EL. Der Kondensator C3 verbindet eine erste Ausgangsklemme 8 des HF-Leistungsoszillators mit der ersten Elektrode der Entladungslampe EL. Der Kondensator C3 bildet gemeinsam mit der Spule L einen Reihenresonanzkreis, der mittels Resonanzüberhöhung die zum Zünden der Lampenfüllung erforderliche Amplitude der hochfrequenten Startspannung an den Elektroden der Lampe EL bereitstellt. Die Drossel Dr2 wirkt als HF-Sperre zwischen dem Ausgang des HF-Leistungsoszillators HF und der Vorschaltdrossel Dr1 des Betriebsgeräts V. Der Verbindungspunkt zwischen der Drossel Dr2 und der Spule L ist über einen Koppelkondensator C2 mit der zweiten Ausgangsklemme 7 des HF-Leistungsoszillators verbunden. Er koppelt zum einen den HF-Strom in den Reihenresonanzkreis und trennt zum anderen die Netzspannung galvanisch vom HF-Teil.

Der Vorteil dieser Anordnung ist die Möglichkeit eines problemlosen Austausches konventioneller Zündgeräte durch das HF-Zündgerät inklusive der zugehörigen Schalter S1,S2 und des Zeitgebers T.

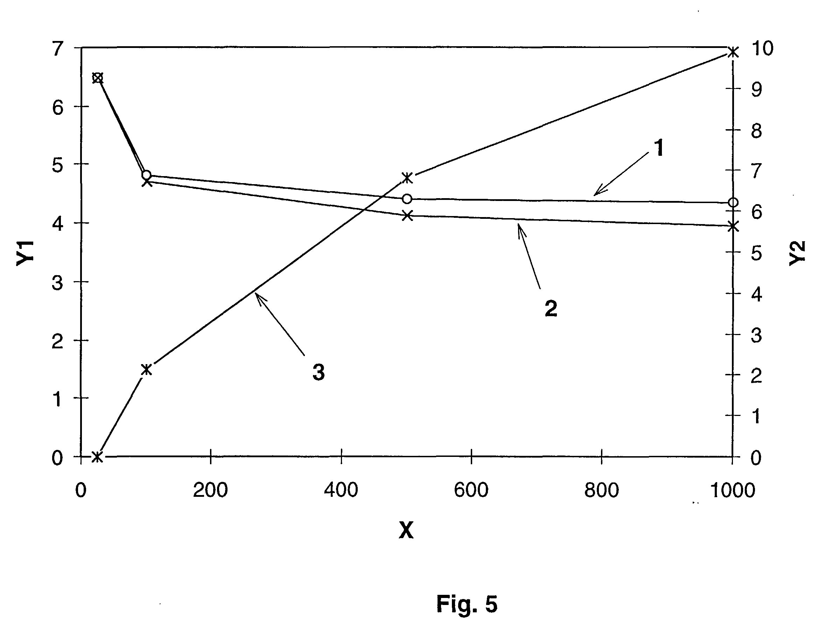

In Figur 5 ist ein Vergleich gemessener Lichtströme (Y1-Achse) als Funktion der kumulierten Anzahl von Zündungen (X-Achse) für Lampen mit HF-Zündgerät (Kurve 1) bzw. konventionellem Zündgerät (Kurve 2) dargestellt. Die kumulierte Anzahl wurde dabei in der Weise realisiert, daß die Lampen im Betrieb jede Stunde einmal aus- bzw. eingeschaltet wurden. Das bedeutet, daß hier die Anzahl der Schaltungen (Werte der X-Achse) der Betriebsdauer in Stunden entspricht. Die Y1-Koordinaten geben somit den Lichtstrom der Lampen in Kilolumen (klm) bei der bis zum Zeitpunkt der jeweiligen Lichtstrommessung ausgeführten Anzahl von Zündungen an. Die Messungen wurden an 70 W Metallhalogenid-Entladungslampen mit thorierten Elektroden aber ohne Kr85-Zusatz durchgeführt. Dabei waren im Falle des HF-Zündgeräts die in der Tabelle gezeigten Verfahrensparameter eingestellt. Deutlich ist zu erkennen, wie

EP 0 715 487 B1

mit der Anzahl der ausgeführten Zündungen der Lichtstrom bei der erfindungsgemäßen Betriebsweise (Kurve 1) weniger abnimmt als bei der konventionellen Betriebsweise (Kurve 2). Besonders deutlich ist der Nutzen der Erfindung aus der Kurve 3 ersichtlich, welche den prozentualen Gewinn an Lichtstrom bei den erfindungsgemäß betriebenen Lampen bezüglich konventionell betriebenen Lampen zeigt. Dieser Gewinn nimmt im Rahmen der Messungen mit der Anzahl der Zündungen stetig zu und erreicht bei 1000 Zündungen bereits knapp 10 %.

**Patentansprüche**

1. Verfahren zum Starten und Betreiben von Hochdruck-Entladungslampen mit einem eine ionisierbare Füllung enthaltenden Entladungsgefäß, in das mindestens zwei Elektroden eingebracht sind, wobei an den Elektroden über gasdicht nach außen geführte Stromzuführungen eine hochfrequente Startspannung $U_{HF}$ und eine Betriebsspannung $U_B$ bereitgestellt wird, **gekennzeichnet durch** folgende Verfahrensschritte:

   - Einschalten der Startspannung $U_{HF}$ zum Startzeitpunkt $t_0$, zur Ionisierung der Füllung und zum Vorheizen der Elektroden,
   - Einschalten der Betriebsspannung $U_B$ nach einer Vorheizzeit $\Delta t_H$, d.h. zum Zeitpunkt $t_1 = t_0 + \Delta t_H$,
   - Abschalten der Startspannung $U_{HF}$ zum Zeitpunkt $t_2 \geq t_1$, wodurch die Lampe anschließend allein mittels der Betriebsspannung $U_B$ betrieben wird.

2. Verfahren nach Anspruch 1, **dadurch gekennzeichnet, daß** das Produkt aus der Frequenz f der Startspannung $U_{HF}$ und dem Abstand d der Elektroden die Bedingung $f \cdot d \geq 50$ kHz · cm erfüllt.

3. Verfahren nach Anspruch 1, **dadurch gekennzeichnet, daß** die Frequenz f der Startspannung $U_{HF}$ im Bereich zwischen ca. 100 kHz und 200 kHz liegt.

4. Verfahren nach Anspruch 1, **dadurch gekennzeichnet, daß** für die Vorheizzeit $\Delta t_H$ die Bedingung $0 < \Delta t_H \leq 3s$ gilt.

5. Verfahren nach Anspruch 4, **dadurch gekennzeichnet, daß** für die Vorheizzeit $\Delta t_H$ bevorzugt die Bedingung $0,1s \leq \Delta t_H \leq 1,5s$ gilt.

6. Verfahren nach Anspruch 1, **dadurch gekennzeichnet, daß**, für den Fall, daß $t_2 > t_1$ ist, für die Überlappzeit $\Delta t_{\ddot{U}} = t_2 - t_1$ die Bedingung $\Delta t_{\ddot{U}} \leq 5s$ gilt.

7. Verfahren nach Anspruch 6, **dadurch gekennzeichnet, daß** für die Überlappzeit $\Delta t_{\ddot{U}}$ bevorzugt die Bedingung $0,1s \leq \Delta t_{\ddot{U}} \leq 0,5s$ gilt.

8. Verfahren nach Anspruch 1, **dadurch gekennzeichnet, daß** der Quotient $U_{HF}^S/d$ aus dem Spitze-Wert der Startspannung $U_{HF}^S$ und dem Elektrodenabstand d die folgende Bedingung erfüllt: $1$ kV/cm $< U_{HF}^S/d < 6$ kV/cm.

9. Verfahren nach Anspruch 8, **dadurch gekennzeichnet, daß** der Quotient $U_{HF}^S/d$ die Bedingung $2,5$kV/cm $< U_{HF}^S/d < 4,5$kV/cm erfüllt.

10. Verfahren nach Anspruch 8 oder 9, **dadurch gekennzeichnet, daß** der auf den Fülldruck p des Entladungsgefäßes bezogene Quotient $E_{HF}^S/p = U_{HF}^S/(d \cdot p)$ die Bedingung $0,1$ V/cm · Pa $< E_{HF}^S/p < 0,5$ V/cm · Pa erfüllt.

11. Verfahren nach Anspruch 1, **dadurch gekennzeichnet, daß** der Spitze-Wert der Startspannung $U_{HF}^S$ im Bereich zwischen ca. 1,5 kV und 3,5 kV liegt.

12. Verfahren nach Anspruch 11, **dadurch gekennzeichnet, daß** der Wert von $U_{HF}^S$ bevorzugt im Bereich zwischen ca. 2 kV und 3 kV liegt.

13. Verfahren nach Anspruch 1, **dadurch gekennzeichnet, daß** die mittlere hochfrequente Startleistung etwa das 0,2- bis 0,7-fache der Betriebsleistung beträgt.

14. Verfahren nach Anspruch 13, **dadurch gekennzeichnet, daß** die mittlere hochfrequente Startleistung bevorzugt das 0,3- bis 0,6-fache der Betriebsleistung beträgt.

**15.** Schaltungsanordnung zur Durchführung des Verfahrens nach Anspruch 1, **gekennzeichnet durch** ein HF-Zündgerät (Z), welches mit einem ersten Schalter (S1) verbunden ist und die hochfrequente Startspannung bzw. Startleistung liefert, ein Betriebsgerät (V), welches mit einem zweiten Schalter (S2) verbunden ist und die Betriebsspannung bzw. Betriebsleistung liefert, wobei der Ausgang sowohl des Betriebs- als auch des HF-Zündgeräts (V; Z) mit den Elektroden der Lampe (EL) verbunden sind, sowie **durch** einen die beiden Schalter (S1, S2) steuernden Zeitgeber (T).

**16.** Schaltungsanordnung nach Anspruch 15, **dadurch gekennzeichnet, daß** der Ausgang des Betriebsgeräts (V) mit dem Ausgang des HF-Zündgeräts (Z) über ein seriell geschaltetes Sperrglied (SG) verbunden ist, welches die beiden Ausgänge HF-mäßig gegeneinander entkoppelt.

**17.** Schaltungsanordnung nach Anspruch 16, **dadurch gekennzeichnet, daß** das HF-Zündgerät (Z) aus einem HF-Leistungsoszillator (HF) und einen nachgeschalteten LC-Reihenschwingkreis (L, C3) besteht, wobei die Schwingkreisinduktivität (L) seriell in eine der Stromzuführungen der Lampe (EL) geschaltet ist.

**18.** Schaltungsanordnung nach Anspruch 17, **dadurch gekennzeichnet, daß** das Sperrglied durch eine mit der Schwingkreisinduktivität (L) verbundenen HF-Sperrdrossel (Dr2) realisiert ist.

**19.** Schaltungsanordnung nach Anspruch 18, **dadurch gekennzeichnet, daß** der Verbindungspunkt zwischen der HF-Sperrdrossel (Dr2) und der Schwingkreisinduktivität (L) über einen Koppelkondensator (C2) mit dem Ausgang (7) des HF-Leistungsoszillators (HF) verbundenen ist.

**20.** Schaltungsanordnung nach Anspruch 18, **dadurch gekennzeichnet, daß** der erste Schalter (S1) zwischen einer ersten Ausgangsklemme (4) des Betriebsgeräts (V) und einer ersten Eingangsklemme (6) des HF-Zündgeräts (Z) geschaltet ist und daß der zweite Schalter (S2) zwischen der zweiten Ausgangsklemme (3) des Betriebsgeräts (V) und der HF-Sperrdrossel (Dr) geschaltet ist.

## Claims

**1.** Method for starting and operating high-pressure discharge lamps with a discharge vessel which contains an ionizable filling and into which at least two electrodes are introduced, a high-frequency starting voltage $U_{HF}$ and an operating voltage $U_B$ being provided at the electrodes via supply leads guided to the outside in a gas-tight manner, **characterized by** the following method steps:

- turning on the starting voltage $U_{HF}$ at the starting instant $t_0$ to ionize the filling and preheat the electrodes,
- turning on the operating voltage $U_B$ after a preheating time $\Delta t_H$, that is to say at the instant $t_1 = t_0 + \Delta t_H$, and
- turning off the starting voltage $U_{HF}$ at the instant $t_2 \geq t_1$, as a result of which the lamp is subsequently operated by means of the operating voltage $U_B$ alone.

**2.** Method according to Claim 1, **characterized in that** the product of the frequency f of the starting voltage $U_{HF}$ and the spacing d of the electrodes meets the condition $f \cdot d \geq 50$ kHz $\cdot$ cm.

**3.** Method according to Claim 1, **characterized in that** the frequency f of the starting voltage $U_{HF}$ is in the range between approximately 100 kHz and 200 kHz.

**4.** Method according to Claim 1, **characterized in that** the preheating time $\Delta t_H$ meets the condition $0 < \Delta t_H \leq 3$ s.

**5.** Method according to Claim 4, **characterized in that** the condition $0.1$ s $\leq \Delta t_H \leq 1.5$ s preferably holds for the preheating time $\Delta t_H$.

**6.** Method according to Claim 1, **characterized in that** the condition $\Delta t_{\ddot{U}} \leq 5$ s for the overlap time $\Delta t_{\ddot{U}} = t_2 - t_1$ holds for the case when $t_2 > t_1$.

**7.** Method according to Claim 6, **characterized in that** preferably the condition $0.1$ s $\leq \Delta t_{\ddot{U}} \leq 0.5$ s holds for the overlap time $\Delta t_{\ddot{U}}$.

**8.** Method according to Claim 1, **characterized in that** the quotient $U_{HF}^S/d$ of the peak value of the starting voltage

$U_{HF}^S$ and electrode spacing d meet$_S$ the following condition: 1 kV/cm < $U_{HF}^S$/d < 6 kV/cm.

9. Method according to Claim 8, **characterized in that** the quotient $U_{HF}^S$/d meets the condition 2.5 kV/cm < $U_{HF}^S$/d < 4.5 kV/cm.

10. Method according to Claim 8 or 9, **characterized in that** the quotient $E_{HF}^S$/p=$U_{HF}^S$/(d·p) referred to the filling pressure p of the discharge vessel meets the condition 0.1 V/cm · Pa < $E_{HF}^S$/p < 0.5 V/cm · Pa.

11. Method according to Claim 1, **characterized in that** the peak value of the starting voltage $U_{HF}^S$ is in the range between approximately 1.5 kV and 3.5 kV.

12. Method according to Claim 11, **characterized in that** the value of $U_{HF}^S$ is preferably in the range between approximately 2 kV and 3 kV.

13. Method according to Claim 1, **characterized in that** the mean high-frequency starting power is approximately 0.2 to 0.7 times the operating power.

14. Method according to Claim 13, **characterized in that** the mean high-frequency starting power is preferably 0.3 to 0.6 times the operating power.

15. Circuit arrangement for carrying out the method according to Claim 1, **characterized by** an HF ignition device (Z) which is connected to a first switch (S1) and supplies the high-frequency starting voltage or starting power, an operating device (V) which is connected to a second switch (S2) and supplies the operating voltage or operating power, the output both of the operating device and of the HF ignition device (V; Z) being connected to the electrodes of the lamp (EL), and by a timer (T) which controls the two switches (S1, S2).

16. Circuit arrangement according to Claim 15, **characterized in that** the output of the operating device (V) is connected to the output of the HF ignition device (Z) via a serially connected blocking element (SG) which decouples the two outputs from one another for high frequencies.

17. Circuit arrangement according to Claim 16, **characterized in that** the HF ignition device (Z) comprises an HF power oscillator (HF) and a downstream LC series resonant circuit (L, C3), the resonant circuit inductor (L) being connected serially into one of the supply leads of the lamp (EL).

18. Circuit arrangement according to Claim 17, **characterized in that** the blocking element is implemented by an HF blocking inductor (Dr2) connected to the resonant circuit inductor (L).

19. Circuit arrangement according to Claim 18, **characterized in that** the tie point between the HF blocking inductor (Dr2) and the resonant circuit inductor (L) is connected to the output (7) of the HF power oscillator (HF) via a coupling capacitor (C2).

20. Circuit arrangement according to Claim 18, **characterized in that** the first switch (S1) is connected between a first output terminal (4) of the operating device (V) and a first input terminal (6) of the HF ignition device (Z) and **in that** the second switch (S2) is connected between the second output terminal (3) of the operating device (V) and the HF blocking inductor (Dr).

**Revendications**

1. Procédé pour amorcer et alimenter des lampes à décharge à haute pression, comportant une enceinte de décharge qui contient une atmosphère ionisable et dans laquelle sont montés au moins deux électrodes, une tension $U_{HF}$ d'amorçage à haute fréquence et une tension $U_B$ d'alimentation étant mises à disposition sur les électrodes par l'intermédiaire d'entrées de courant passant à l'extérieur de manière étanche au gaz, **caractérisée par** les étapes opératoires suivantes :

   - branchement de la tension $U_{HF}$ d'amorçage à l'instant $t_0$ pour ioniser l'atmosphère et pour préchauffer les électrodes,

- branchement de la tension $U_B$ d'alimentation après une durée $\Delta t_H$ de préchauffage, c'est-à-dire à l'instant $t_1 = t_0 + \Delta t_h$,

- débranchement de la tension $U_{HF}$ d'amorçage à l'instant $t_2 \geq t_1$, ce qui fait que la lampe fonctionne ensuite rien qu'au moyen de la tension $U_B$ d'alimentation.

2. Procédé suivant la revendication 1, **caractérisée en ce que** le produit de la fréquence f de la tension $U_{HF}$ d'amorçage par la distance d entre les électrodes satisfait la condition $f.d \geq 50$ kHz cm.

3. Procédé suivant la revendication 1, **caractérisée en ce que** la fréquence f de la tension $U_{HF}$ d'amorçage est dans l'intervalle compris entre environ 100 kHz et 200 kHz.

4. Procédé suivant la revendication 1, **caractérisée en ce que** la condition $0 < \Delta t_H \leq 3$ s est valable pour la durée $\Delta t_H$ de préchauffage.

5. Procédé suivant la revendication 4, **caractérisé en ce que** la condition $0,1$ s $\leq \Delta t_H \leq 1,5$ s est valable pour la durée $\Delta t_H$ de préchauffage.

6. Procédé suivant la revendication 1, **caractérisé en ce que** dans le cas ou $t_2 > t_1$, on a pour la durée de chevauchement $\Delta t_{\ddot{U}} = t_2 - t_1$, la condition $\Delta t_{\ddot{U}} \leq 5$ s.

7. Procédé suivant la revendication 6, **caractérisé en ce que**, pour la durée de chevauchement $\Delta t_{\ddot{U}}$, on a de préférence la condition $0,1$ s $\leq \Delta t_{\ddot{U}} \leq 0,5$ s.

8. Procédé suivant la revendication 1, **caractérisé en ce que** le quotient $U_{HF}^S/d$ de la valeur de pic de la tension $U_{HF}^S$ d'amorçage sur la distance d entre les électrodes satisfait la condition suivante : $1$ kV/cm $< U_{HF}^S/d < 6$ kV/cm.

9. Procédé suivant la revendication 8, **caractérisé en ce que** le quotient $U_{HF}^S/d$ satisfait la condition $2,5$ kV/cm $< U_{HF}^S/d < 4,5$ kV/cm.

10. Procédé suivant la revendication 8 ou 9, **caractérisé en ce que** le quotient $E_{HF}^S/p = U_{HF}^S/(d.p)$ rapporté à la pression p de l'atmosphère de l'enceinte de décharge satisfait la condition $0,1$ V/cm.Pa $< E_{HF}^S/p < 0,5$ V/cm:Pa.

11. Procédé suivant la revendication 1, **caractérisé en ce que** la valeur de pic de la tension $U_{HF}^S$ d'amorçage est comprise dans l'intervalle entre $1,5$ kV et $3,5$ kV.

12. Procédé suivant la revendication 11, **caractérisé en ce que** la valeur de $U_{HF}^S$ est de préférence dans l'intervalle compris entre environ 2 kV et 3 kV.

13. Procédé suivant la revendication 1, **caractérisé en ce que** la puissance d'amorçage haute fréquence moyenne est égale à environ 0,2 à 0,7 fois la puissance de fonctionnement.

14. Procédé suivant la revendication 13, **caractérisé en ce que** la puissance d'amorçage haute fréquence moyenne est égale de préférence à 0,3 à 0,6 fois la puissance de fonctionnement.

15. Montage pour la mise en oeuvre du procédé suivant la revendication 1 **caractérisé par** un appareil (Z) d'amorçage haute fréquence qui est relié à un premier commutateur (S1) et qui fournit la tension d'amorçage et la puissance d'amorçage haute fréquence, par un appareil (V) d'alimentation qui est relié à un deuxième commutateur (S2) et qui fournit la tension d'alimentation et la puissance d'alimentation, la sortie tant de l'appareil (V) d'alimentation que de l'appareil (Z) d'amorçage haute fréquence étant reliée aux électrodes de la lampe (EL), ainsi que par une horloge (T) commandant les deux commutateurs (S1, S2).

16. Montage sur la revendication 15, **caractérisé en ce que** la sortie de l'appareil (V) d'alimentation est reliée à la sortie de l'appareil (Z) d'amorçage haute fréquence par l'intermédiaire d'un élément (SG) de blocage branché en série, qui découple les deux sorties l'une de l'autre du point de vue des hautes fréquences.

17. Montage suivant la revendication 16, **caractérisé en ce que** l'appareil (Z) d'amorçage haute fréquence est constitué d'un oscillateur (HF) de puissance haute fréquence et d'un circuit (L, C3) série oscillant (LC) en aval, l'inductance (L) du circuit oscillant étant branchée dans l'une des entrées de courant de la lampe (EL).

18. Montage suivant la revendication 17, **caractérisé en ce que** l'élément de blocage est réalisé par une bobine (Dr2) de blocage haute fréquence reliée à l'inductance (L) du circuit oscillant.

19. Montage suivant la revendication 18, **caractérisé en ce que** le point de liaison entre la bobine (Dr2) de blocage haute fréquence et l'inductance (L) du circuit oscillant est relié à la sortie (7) de l'oscillateur (HF) de puissance haute fréquence par l'intermédiaire d'un condensateur (C2) de couplage.

20. Montage suivant la revendication 18, **caractérisé en ce que** le premier interrupteur (S1) est branché entre une première borne (4) de sortie de l'appareil (V) d'alimentation et une première borne (6) d'entrée de l'appareil (Z) d'amorçage haute fréquence et **en ce que** le deuxième interrupteur (S2) est branché entre la deuxième borne (3) de sortie de l'appareil (V) d'alimentation et la bobine (Dr) de blocage haute fréquence.

Fig. 1

**Lampe 1**  **Lampe 2**

a)

$$t_1 \qquad t_S \qquad t$$

$$t_1 \qquad t$$

b)

$$t_1 \qquad t_S \qquad t$$

$$t_1 \qquad t_S \qquad t$$

c)

$$t_0 \qquad t_1 \; t_S \qquad t_2 \qquad t$$

$$t_0 \qquad t_1 \; t_S \qquad t_2 \qquad t$$

**Legende:**

a) $t_1 : U_P + U_B$ ein $\qquad$ $t_S :$ Bogen ausgebildet

b) $t_1 : U_{HF} + U_B$ ein $\qquad$ $t_S :$ Bogen ausgebildet

c) $t_0 : U_{HF}$ ein $\qquad$ $t_1 : U_B$ ein $\qquad$ $t_2 : U_{HF}$ aus $\qquad$ $t_S :$ Bogen ausgebildet

**Fig. 2**

EP 0 715 487 B1

**Fig. 3**

**Fig. 4**

230 V

50 Hz

Dr 1

S 2

Dr 2

L

1

3

D

5    7

C2

EL

~

C1

T

HF

C3

15

2

4

6    8

S 1

V

EP 0 715 487 B1

Fig. 5